# EUROPEAN PATENT SPECIFICATION

(11) **EP 4 101 650 B1**
(45) Date of publication and mention of the grant of the patent: **02.10.2024**
(21) Application number: 20917735.1
(22) Date of filing: 07.12.2020
(51) Int. Cl.: B41J 29/38, B41J 2/01, B41J 3/407, B41J 29/00, G06F 3/12

(54) **CAN BODY PRINTING SYSTEM AND CAN BODY PRINTING DEVICE**
DOSENKÖRPERDRUCKSYSTEM UND DOSENKÖRPERDRUCKGERÄT
SYSTÈME D'IMPRESSION DE CORPS DE BOÎTE ET DISPOSITIF D'IMPRESSION DE CORPS DE BOÎTE

(30) Priority: 03.02.2020 JP 2020016622
(43) Date of publication of application: 14.12.2022
(73) Proprietor: ALTEMIRA Co., Ltd., Tokyo 112-8525 (JP)
(72) Inventor: OJIMA, Shinichi, Tokyo 1128525 (JP); MATSUSHIMA, Hitomi, Tokyo 1128525 (JP); FUJINUMA, Kenji, Tokyo 1128525 (JP)
(74) Representative: Strehl Schübel-Hopf & Partner
(86) International application number: PCT/JP2020/045403
(87) International publication number: WO 2021/157179

(56) References cited:
- WO-A1-2019/021739
- JP-A- 2007 245 501
- JP-A- 2007 245 501
- JP-A- 2013 022 935
- JP-A- 2017 071 059
- JP-A- 2017 113 881
- JP-A- 2017 113 881
- US-A1- 2007 257 954
- US-A1- 2018 164 719
- US-A1- 2018 164 719

## Description

### Technical Field

The present invention relates to a can body printing system and a can body printing device.

### Background Art

Patent Literature 1 discloses technology for a parts monitoring device configured to detect usage of parts that are not regular ones and to limit operations of working machines upon detection of such usage.

### Citation List

### Patent Literature

Patent Literature 1: Japanese Patent Application Laid-Open Publication No. 2013-101686 JP-A-2017/071059 discloses the preamble of claim 1.

### Summary of Invention

### Technical Problem

Recent advancements in technology for printing on can bodies have made it possible to allow users to consider performing printing on can bodies by themselves, which was previously impossible.

However, if users are allowed to perform printing too freely, printing may be performed on can bodies that are not regular ones. In such cases, intended print quality may not be achieved.

It is an object of the present invention to ensure printing on can bodies with better print quality as compared to when users are allowed to freely perform printing on can bodies.

### Solution to Problem

A can body printing system according to an aspect of the present invention includes the features of claim 1.

The condition set by the third party may be a condition related to a prescribed quantity for printing on can bodies, the can body printing system may further include a quantity measurement section configured to measure a quantity of can bodies having undergone the printing, and the detection section may be configured to detect that the quantity measured by the quantity measurement section has reached the prescribed quantity.

The condition set by the third party may be a condition related to prescribed time for printing on can bodies, the can body printing system may further include a time measurement section configured to measure time taken for the printing, and the detection section may be configured to detect that the time measured by the time measurement section has reached the prescribed time.

The condition set by the third party may be a condition related to a prescribed amount of electricity used by a device for printing on can bodies, the can body printing system may further include an electricity measurement section configured to measure an amount of electricity used for the printing, and the detection section may be configured to detect that the amount of electricity measured by the electricity measurement section has reached the prescribed amount of electricity.

The condition set by the third party may be a condition related to a prescribed amount of a consumable for use in printing on can bodies, the can body printing system may further include a consumable amount measurement section configured to measure an amount of the consumable used for the printing, and the detection section may be configured to detect that the amount of the consumable measured by the consumable amount measurement section has reached the prescribed amount.

A can body printing device according to another aspect of the present invention includes: a printing section configured to print on can bodies; and a stopping section configured to stop printing in response to satisfaction of a condition set by a third party that is not a user who performs the printing.

### Advantageous Effects of Invention

The present invention ensures printing on can bodies with better print quality as compared to when users are allowed to freely perform printing on can bodies.

### Brief Description of Drawings

FIG. 1 illustrates a hardware configuration of a can body printing system according to an embodiment.
FIG. 2 illustrates a functional configuration of a printing device-side (a printing device or the printing device and a user PC) according to the embodiment.
FIG. 3 illustrates a functional configuration of a host device according to the embodiment.
FIG. 4 is a flowchart of a process executed by the printing device-side according to the embodiment.
FIGS. 5A and 5B are flowcharts of processes executed by the host device.

### Description of Embodiments

### [Configuration of can body printing system]

Hereinafter, a can body printing system according to an exemplary embodiment is detailed with reference to the appended drawings.

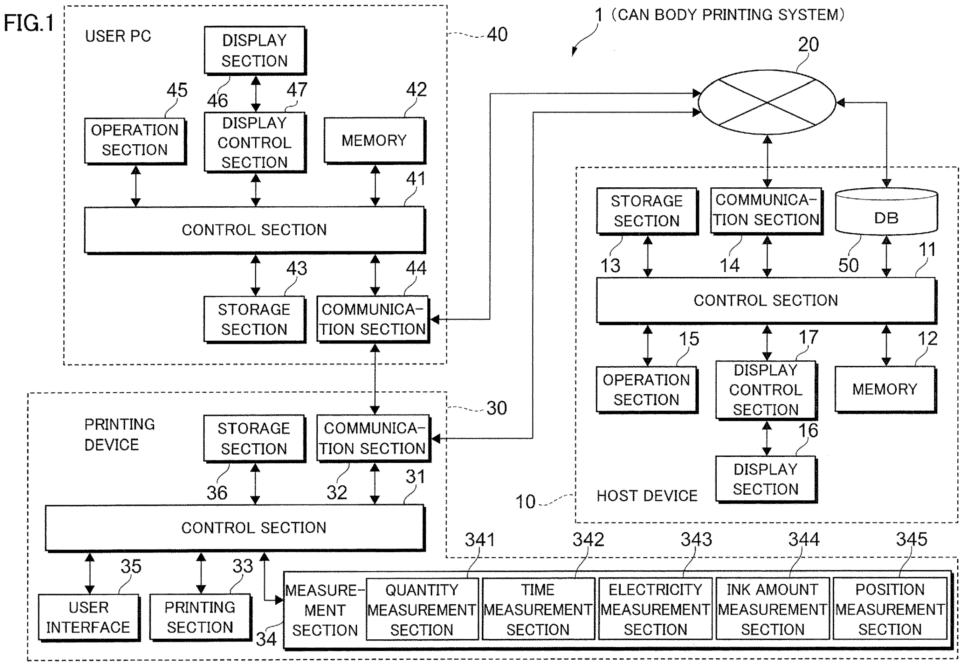

FIG. 1 illustrates a hardware configuration of a can body printing system 1 according to the present embodiment. The can body printing system 1 includes: a host device 10 that is an information processing device on which the can body printing system 1 is based; and a printing device 30 for a user who performs printing on can bodies. The host device 10 and the printing device 30 are connected via a network 20, such as the Internet. In an implementation, a user PC 40 connected to the printing device 30 and operated by the user who performs printing on can bodies may be connected to the host device 10 via the network 20.

The host device 10 is a computer device provided by, for example, a provider of can bodies subjected to printing by the printing device 30 or a provider of the printing device 30. A database (DB) 50 storing various kinds of information for use in the can body printing system 1 is connected to the host device 10 either directly or via the network 20.

The host device 10 includes: a control section 11 implemented by a central processing unit (CPU) to control the entire device; and a memory 12, such as a random access memory (RAM), used as a working area for calculations. The host device 10 further includes a storage section 13 to store programs and various setting data. Examples of the storage section 13 includes storage devices such as semiconductor memories and hard disk drives (HDDs). The host device 10 further includes a communication section 14 for data exchange via the network 20.

The host device 10 further includes an operation section 15, such as a keyboard, a pointing device, and/or a touch panel, and receives inputs from administrators responsible for the can body printing system 1. The host device 10 further includes a display section 16, such as one implemented by a liquid crystal display, for presentation of images and text information necessary for administrative tasks performed by the administrators. The host device 10 further includes a display control section 17 to control the display section 16. It should be noted that these pieces of hardware do not necessarily share a single housing.

The printing device 30 includes: a control section 31 to control the entire device; and a communication section 32 for exchanges of various data via the network 20. The printing device 30 further includes a printing section 33 to produce printing on can bodies. The printing device 30 further includes a measurement section 34 to measure information indicative of status of the printing device 30. The printing device 30 further includes a user interface 35 for presentation of information to the user operating the printing device 30 and for receiving inputs from the user. The printing device 30 further includes a storage section 36 to store printed image information and other information obtained.

The printing section 33 is capable of conducting digital ink-jet printing on can bodies and changing printed content for each can body. These features are distinct from ordinary block copy-based printing on can bodies, providing more user convenience and helping reduce the device weight. At the printing section 33, ink is ejected as droplets from nozzles and adhered onto an outer surface of each can body, whereby images are formed on the outer surface. Further, paint is applied over the images to form a protective layer. The printing section 33 uses, for example, a basic four color ink set of cyan (C), magenta (M), yellow (Y), and black (K) and, when necessary, further uses special inks of special colors prepared for each brand. In this case, an ink-jet head is prepared for each color, so that a plurality of ink-jet heads are used to form images on can bodies. An actinic radiation-curable ink is a preferred choice for the ink to be used. Examples of the actinic radiation-curable ink include an ultraviolet (UV)-curable ink. After the images are formed using the ink-jet heads, paint is applied onto the outer surface of the can body to form a protective layer (overcoat layer).

Can bodies as media subjected to printing may include both those unfilled with beverages, such as beer, and those filled with beverages.

The measurement section 34 includes sections for measuring various kinds of information indicative of status of the printing device 30, including a quantity measurement section 341, a time measurement section 342, an electricity measurement section 343, an ink amount measurement section 344, and a position measurement section 345.

The quantity measurement section 341 measures the quantity of can bodies having undergone the printing by the printing device 30, as information indicative of the status of the printing device 30. Specifically, for example, the printing section 33 may be provided with a counter to count each can body having undergone the printing process. Alternatively, for example, a quantity counter may be provided at any point through which can bodies having undergone the printing pass before being discharged from the printing device 30, and may count each can body passing through the point.

The time measurement section 342 measures the time taken by the printing device 30 to print on can bodies, as information indicative of the status of the printing device 30. Specifically, for example, a mechanism may be provided that can measure a print start time and a print end time. In this case, the time taken to print on can bodies may be calculated based on the difference between the measured times. Alternatively, for example, when operating time of the printing device 30 can be viewed as printing time, a mechanism may be provided that can measure the operating time of the printing device 30. In this case, the time taken to print on can bodies may be calculated based on the measured operating time.

The electricity measurement section 343 measures an amount of electricity used for printing on can bodies by the printing device 30, as information indicative of the status of the printing device 30. Specifically, for example, the printing device 30 may be provided with a power meter that can measure the amount of electricity used. In this case, the amount of electricity used for printing on can bodies may be calculated based on the difference between the amount of electricity used at the start of printing and the amount of electricity used at the end of printing.

The ink amount measurement section 344 measures an amount of ink used for printing on can bodies by the printing device 30, as information indicative of the status of the printing device 30. Specifically, for example, each printing device 30 may be provided with a mechanism that can measure the amount of ink used and output the amount of ink remaining as numerical values. In this case, the amount of ink used for printing on can bodies may be calculated based on the difference between the amount of remaining ink at the start of printing and the amount of ink remaining at the end of printing. Alternatively, when a value indicative of the amount of ink needed for printing on a single can body is known in advance, the amount of ink used may be measured by multiplying this value by the quantity of can bodies having undergone the printing, which can be obtained from the quantity measurement section 341.

The position measurement section 345 measures a position of the printing device 30, as information indicative of the status of the printing device 30. For example, a global positioning system (GPS) location information about the printing device 30 may be used. The information indicative of the status of the printing device 30 as measured by the measurement section 34 is stored in the storage section 36 of the printing device 30 and/or a storage section 43 (described below) of the user PC 40.

The printing device 30 is connected to the user PC 40, which is a computer device operated by the user, either directly with an interface cable or via, e.g., a local area network (LAN), such as Ethernet^{®}. For example, the user PC 40 provides various settings for the printing device 30 and acquires and presents information indicative of the status of the printing device 30, in addition to providing printed image information to the printing device 30. The user PC 40 is also connected to the host device 10 via the network 20 to acquire various kinds of information from the host device 10. In an implementation, the communication section 32 of the printing device 30 may directly communicate with the host device 10; in another implementation, the communication section 32 may communicate with the host device 10 via the user PC 40. These implementations may be used selectively depending on the relevant information.

The user PC 40 includes a control section 41 to control the entire device and a memory 42, such as a RAM, used as a working area for calculations. The user PC 40 further includes a storage section 43 to store programs and various setting data. The storage section 43 is implemented by a storage device such as a semiconductor memory and an HDD. The user PC 40 further includes a communication section 44 for data exchanges via the network 20 and/or for data exchanges through connection to the printing device 30. The user PC 40 further includes an operation section 45, such as a keyboard, a pointing device, a touch panel, and/or a bar-code reader, to receive inputs from the user using the printing device 30. The user PC 40 further includes a display section 46, such as one implemented by a liquid crystal display, for presentation of images and text information necessary for printing tasks performed by the user. The user PC 40 further includes a display control section 47 to control the display section 46.

It should be noted that, while the printing device 30 alone may be considered as the "can body printing device", the printing device 30 and the user PC 40 may be collectively considered as the "can body printing device".

### (Functional configuration of the printing device 30)

Functions of the printing device 30 side (the printing device 30 or the printing device 30 and the user PC 40) in the present embodiment are now described. An advantageous feature of the present embodiment lies in that the printing device 30 performs, alone or jointly with the user PC 40, operations including stopping the printing upon detection of satisfaction of any of conditions set by a third party that is not the user.

For example, the "third party that is not the user" may be a company that provides the printing device 30 to the user. For example, the "conditions set by the third party that is not the user" may be conditions that are predetermined by the company providing the printing device 30 to the user based on the assumption that printing is performed on regular can bodies by the user. The "regular can bodies" include, for example, can bodies provided along with the printing device 30 by the company providing the printing device 30 to the user and can bodies provided by an entity authorized by the company providing the printing device 30. In this case, can bodies that are manufactured by any unauthorized entity without permission from the company providing the printing device 30 to the user (e.g., counterfeit products) are "irregular can bodies" that are not regular ones.

However, it is not necessarily easy to correctly recognize the regular can bodies. Thus, as an alternative to this approach, in the present embodiment, conditions that are predetermined based on the assumption that printing is performed on regular can bodies by the user are employed to accept and handle can bodies as the regular ones. In other words, while can bodies susceptible to these conditions are not necessarily the regular ones, these conditions are defined by the non-user third party to allow can bodies to be handled as the regular ones.

Examples of these conditions predetermined based on the assumption that printing is performed on regular can bodies by the user include a condition with respect to a predetermined quantity (prescribed quantity) of can bodies available for printing by the printing device 30. Examples of these conditions further include a condition with respect to time (prescribed time) taken by the printing device 30 to print on can bodies. Examples of these conditions further include a condition with respect to an amount of electricity (prescribed amount of electricity) used by the printing device 30 to print on can bodies. Examples of these conditions further include a condition with respect to an amount (prescribed amount) of ink used by the printing device 30 to print on can bodies. Examples of these conditions further include a condition with respect to a position (prescribed position) of the printing device 30.

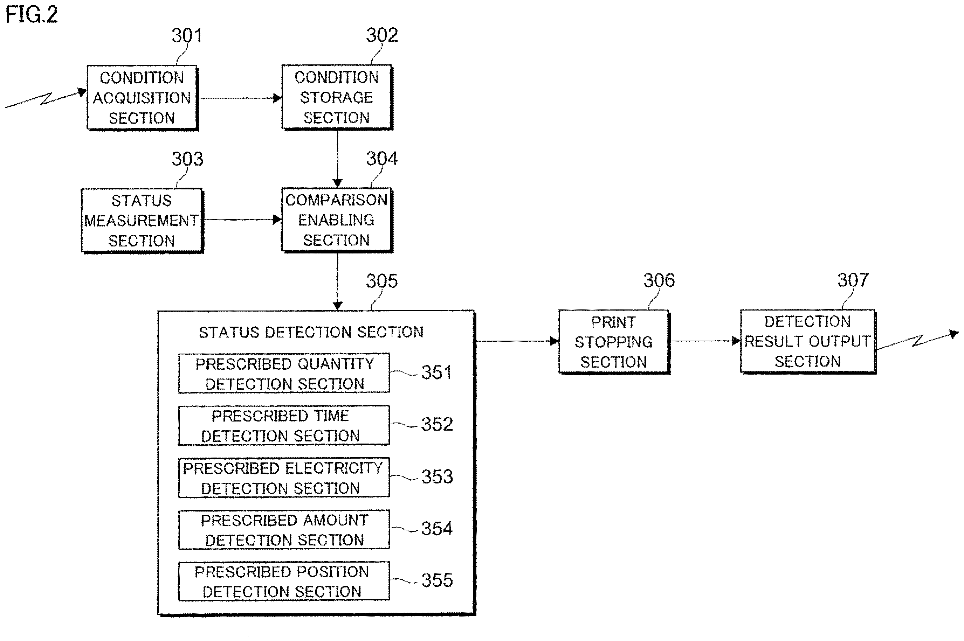

FIG. 2 illustrates a functional configuration of the printing device 30 side (the printing device 30 or the printing device 30 and the user PC 40) according to the present embodiment. The printing device 30 side includes a condition acquisition section 301 to acquire information indicative of the conditions predetermined based on the assumption that printing is performed on regular can bodies by the user. The printing device 30 side further includes a condition storage section 302 to store the information acquired by the condition acquisition section 301 in the storage section 43 of the user PC 40, the storage section 36 of the printing device 30, and/or the like.

The printing device 30 side further includes a status measurement section 303 to measure information indicative of the status of the printing device 30 using the measurement section 34. The printing device 30 side further includes a comparison enabling section 304 to perform, when necessary, a conversion process to enable comparison between the information measured by the status measurement section 303 and the information acquired by the condition acquisition section 301. The printing device 30 side further includes a status detection section 305 to detect, when printing is performed on one or more can bodies by the user, satisfaction of any of the conditions predetermined based on the assumption that printing is performed on regular can bodies by the user. The printing device 30 side further includes a print stopping section 306 to control a stoppage of the printing on can bodies, in response to the status detection section 305 detecting satisfaction of any of the conditions. The printing device 30 side further includes a detection result output section 307 to output information about the detection to the host device 10 via the communication section 32 and the network 20.

The conversion process by the comparison enabling section 304 converts values and the like so that the information indicative of the conditions predetermined based on the assumption that printing is performed on regular can bodies by the user and the information indicative of the status of the printing device 30 can be compared, in cases where a simple comparison therebetween is impossible.

In order to detect satisfaction of the above conditions, the status detection section 305 includes a prescribed quantity detection section 351, a prescribed time detection section 352, a prescribed electricity detection section 353, a prescribed amount detection section 354, and a prescribed position detection section 355.

The prescribed quantity detection section 351 detects that the quantity of can bodies having undergone the printing by the printing device 30 has reached the prescribed quantity. The prescribed time detection section 352 detects that the time taken for the printing on can bodies by the printing device 30 has reached the prescribed time. The prescribed electricity detection section 353 detects that the amount of electricity used for the printing on can bodies by the printing device 30 has reached the prescribed amount of electricity. The prescribed amount detection section 354 detects that the amount of ink used for the printing on can bodies by the printing device 30 has reached the prescribed amount. The prescribed position detection section 355 detects that the position of the printing device 30 has been displaced from the prescribed position.

The print stopping section 306 controls a stoppage of the printing on can bodies in response to any of the prescribed quantity detection section 351, the prescribed time detection section 352, the prescribed electricity detection section 353, the prescribed amount detection section 354, and the prescribed position detection section 355 detecting satisfaction of a corresponding one of the above conditions.

Specifically, the print stopping section 306 forces the printing to stop in response to the prescribed quantity detection section 351 detecting that the print quantity has reached the prescribed quantity. Forcing a stoppage of the printing by the printing device 30 makes it impossible for the user to perform printing on can bodies using the printing device 30 anymore. In other words, the user can perform printing on any can body, including irregular can bodies, until the print quantity reaches the prescribed quantity. Upon the print quantity reaching the prescribed quantity, the printing is forced to stop, so that the user can no longer perform printing on can bodies even though they are regular ones. The prescribed quantity is set to be equal to the quantity of regular can bodies purchased by the user.

Also, the print stopping section 306 forces the printing to stop in response to the prescribed time detection section 352 detecting that the printing time has reached the prescribed time. Forcing a stoppage of the printing by the printing device 30 makes it impossible for the user to perform printing on can bodies using the printing device 30 anymore. The prescribed time is defined by the provider of the regular can bodies to the user. The prescribed time is set to be equal to the printing time for the regular can bodies provided to the user.

Also, the print stopping section 306 forces the printing to stop in response to the prescribed electricity detection section 353 detecting that the amount of electricity used has reached the prescribed amount of electricity. Forcing a stoppage of the printing by the printing device 30 makes it impossible for the user to perform printing on can bodies using the printing device 30 anymore. The prescribed amount of electricity is defined by the provider of the regular can bodies to the user. Specifically, for example, an amount of electricity used for printing on a single can body is calculated in advance, and the prescribed amount of electricity is calculated by multiplying that amount of electricity by the number of regular can bodies provided to the user.

Also, the print stopping section 306 forces the printing to stop in response to the prescribed amount detection section 354 detecting that the amount of ink used has reached the prescribed amount. Forcing a stoppage of the printing by the printing device 30 makes it impossible for the user to perform printing on can bodies using the printing device 30 anymore. The prescribed ink amount is defined by the provider of the regular can bodies to the user. Specifically, for example, an amount of ink used for printing on a single can body is calculated in advance, and the prescribed ink amount is calculated by multiplying that amount by the number of regular can bodies provided to the user.

Also, the print stopping section 306 forces the printing to stop in response to the prescribed position detection section 355 detecting that the position of the printing device 30 has been displaced from the prescribed position. Forcing a stoppage of the printing by the printing device 30 makes it impossible for the user to perform printing on can bodies using the printing device 30 anymore. The prescribed position is defined by the provider of the printing device 30 to the user. Specifically, for example, in cases where the location of use of the printing device 30 is defined in detail in the contract or other documents agreed upon when the printing device 30 is provided to the user, that defined location is defined as the prescribed position.

### [Functional configuration of the host device 10]

Functions of the host device 10 according to the present embodiment are now described.

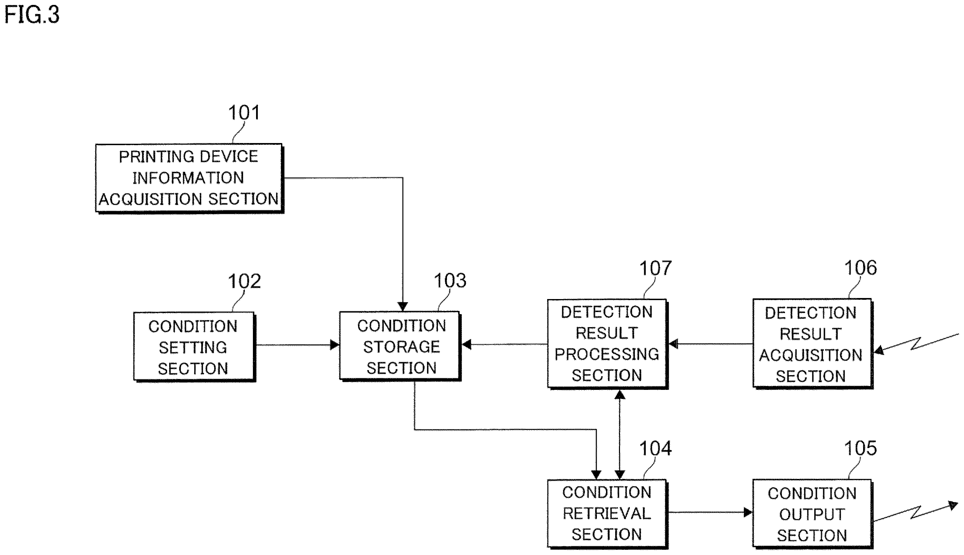

FIG. 3 illustrates a functional configuration of the host device 10 according to the present embodiment. The host device 10 includes a printing device information acquisition section 101 to acquire printing device information from, for example, other computer devices via the network 20. The host device 10 further includes a condition setting section 102 to set, for each printing device 30, conditions applied to the printing on regular can bodies by the user. The host device 10 further includes a condition storage section 103 to store information indicative of the conditions set by the condition setting section 102 in the storage section 13 and/or the DB 50 in association with the printing device information. The host device 10 further includes a condition retrieval section 104 to retrieve from the condition storage section 103 the information indicative of the conditions set by the condition setting section 102. The host device 10 further includes a condition output section 105 to output the information indicative of the retrieved conditions to the printing device 30 side.

In an implementation, the printing device information and the information indicative of the conditions applied to the printing on regular can bodies by the user may be acquired via the network 20 and the communication section 14; in another implementation, these pieces of information may be, for example, input by an administrator of the host device 10 via the operation section 15.

The host device 10 further includes a detection result acquisition section 106 to acquire, upon a stoppage of the printing in response to detection of satisfaction of any condition set by the condition setting section 102, information indicative of the stoppage from the printing device 30 side. The host device 10 further includes a detection result processing section 107 to recognize that the printing has been stopped in response to the detection of satisfaction of any condition set by the condition setting section 102.

### [Processing by the printing device 30]

Processing by the printing device 30 side (the printing device 30 or the printing device 30 and the user PC 40) is now described with reference to FIGS. 1, 2, and 4.

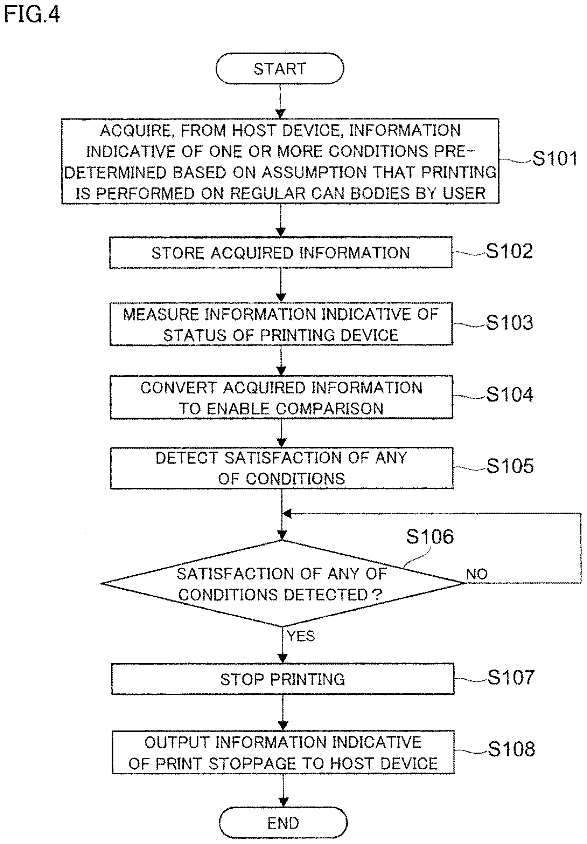

FIG. 4 is a flowchart of a process executed by the printing device 30 side according to the present embodiment. First, the condition acquisition section 301 of the printing device 30 acquires from the host device 10 information indicative of one or more conditions predetermined based on the assumption that printing is performed on regular can bodies by the user (step 101). For example, the condition acquisition section 301 acquires information indicative of a condition specifying that the prescribed quantity is 200. The condition storage section 302 of the printing device 30 stores the information acquired by the condition acquisition section 301 in the storage section 43 of the user PC 40, the storage section 36 of the printing device 30, and/or the like (step 102). For example, when the prescribed quantity is 200, the condition storage section 302 stores information indicative of it in the storage section 43 of the user PC 40, the storage section 36 of the printing device 30, and/or the like.

The status measurement section 303 of the printing device 30 measures information indicative of the status of the printing device 30 using the measurement section 34 (step 103). Specifically, the quantity measurement section 341 of the measurement section 34 measures the quantity of can bodies having undergone the printing. The time measurement section 342 of the measurement section 34 measures the time taken for the printing. The electricity measurement section 343 of the measurement section 34 measures the amount of electricity used for the printing. The ink amount measurement section 344 of the measurement section 34 measures the amount of ink used for the printing. The position measurement section 345 of the measurement section 34 measures the position of the printing device 30.

The comparison enabling section 304 of the printing device 30 converts the information measured by the status measurement section 303 and the information acquired by the condition acquisition section 301 to enable comparison between them (step 104). The status detection section 305 of the printing device 30 detects that any of the conditions predetermined based on the assumption that printing is performed on regular can bodies by the user has been satisfied during printing on can bodies by the user (step 105). Specifically, the prescribed quantity detection section 351 detects that the quantity of can bodies having undergone the printing has reached the prescribed quantity. For example, when the prescribed quantity is 200, the prescribed quantity detection section 351 detects that the quantity of can bodies having undergone the printing has reached 200. The prescribed time detection section 352 detects that the time taken for the printing has reached the prescribed time. The prescribed electricity detection section 353 detects that the amount of electricity used for the printing has reached the prescribed electricity. The prescribed amount detection section 354 detects that the amount of ink used for the printing has reached the prescribed amount. The prescribed position detection section 355 detects that the position of the printing device 30 has been displaced from the prescribed position.

The print stopping section 306 of the printing device 30 determines whether a detection has occurred, i.e., whether the status detection section 305 has detected satisfaction of any of the conditions predetermined based on the assumption that printing is performed on regular can bodies by the user (step 106). Specifically, in response to the prescribed quantity detection section 351 detecting that the print quantity has reached the prescribed quantity, the print stopping section 306 determines that a detection has occurred. For example, when the prescribed quantity is 200, in response to the prescribed quantity detection section 351 detecting that the quantity of can bodies having undergone the printing has reached 200 the print stopping section 306 determines that a detection has occurred. Also, in response to the prescribed time detection section 352 detecting that the print time has reached the prescribed time, the print stopping section 306 determines that a detection has occurred. Also, in response to the prescribed electricity detection section 353 detecting that the amount of electricity used has reached the prescribed amount of electricity, the print stopping section 306 determines that a detection has occurred. Also, in response to the prescribed amount detection section 354 detecting that the amount of ink used has reached the prescribed amount, the print stopping section 306 determines that a detection has occurred. Also, in response to the prescribed position detection section 355 detecting that the position of the printing device 30 has been displaced from the prescribed position, the print stopping section 306 determines that a detection has occurred.

If none of the conditions has been satisfied (No at step 106), step 106 is repeated until the status detection section 305 detects satisfaction of any of the conditions. If the print stopping section 306 determines that a detection has occurred in response to detection of satisfaction of any of the conditions (YES at step 106), the print stopping section 306 stops the printing on can bodies by the printing section 33 (step 107). Then, the detection result output section 307 of the printing device 30 outputs information indicative of the occurrence of print stoppage to the host device 10 via the communication section 32 and the network 20 (step 108), and the process thus ends. The information output to the host device 10 may include, for example, information indicative of which condition was satisfied to cause the print stoppage, in addition to the information indicative of the occurrence of print stoppage.

### [Processing by the host device 10]

Processing by the host device 10 is now described referring to FIGS. 1, 3, and 5.

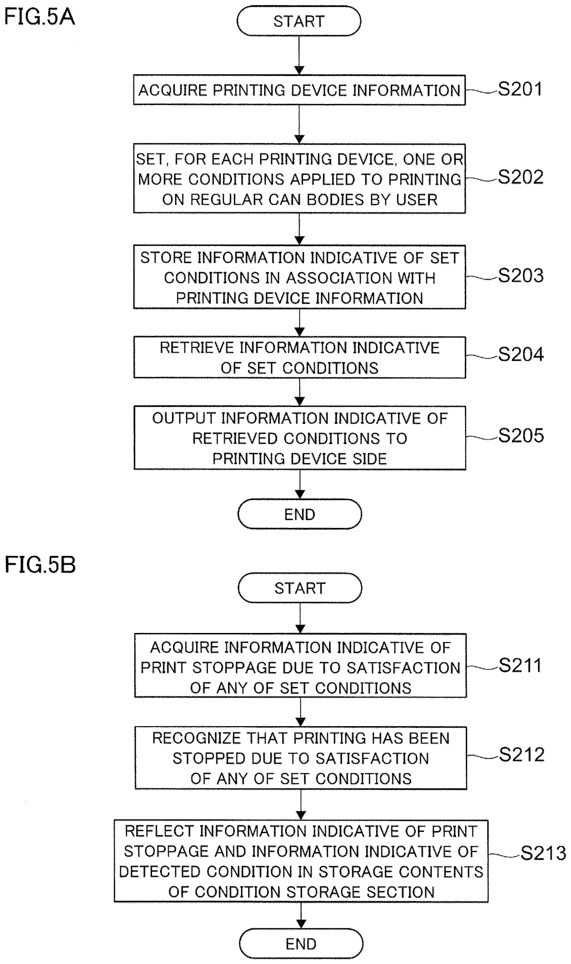

FIGS. 5A and 5B are flowcharts of processes executed by the host device 10. FIG. 5A illustrates a process executed by the host device 10 prior to printing by the printing device 30, and FIG. 5B illustrates a process executed by the host device 10 after a stoppage of printing by the printing device 30.

First of all, prior to printing by the printing device 30, the printing device information acquisition section 101 of the host device 10 acquires printing device information from, for example, a computer device (not shown) owned by the company providing the printing device 30, as shown in FIG. 5A (step 201). The condition setting section 102 of the host device 10 sets, for each printing device 30, one or more conditions applied to printing on regular cans by the user (step 202). For example, the condition setting section 102 sets a condition specifying that the prescribed quantity is defined to be 200. The condition storage section 103 stores the information indicative of the set conditions in the storage section 13 and/or the DB 50 in association with the printing device information (step 203). For example, information indicative of the prescribed quantity being 200 is stored in the storage section 13 and/or the DB 50 in association with the printing device information. The condition retrieval section 104 retrieves from the condition storage section 103 the information indicative of the conditions set by the condition setting section 102 (step 204). For example, the condition retrieval section 104 retrieves from the condition storage section 103 the information indicative of the prescribed quantity being 200. Then, the condition output section 105 outputs information indicative of the retrieved conditions to the printing device 30 side (step 205), and thus the pre-printing process ends. For example, the information indicative of the prescribed quantity being 200 is output to the printing device 30 side, and thus the pre-printing process ends.

After a stoppage of printing by the printing device 30, the detection result acquisition section 106 of the host device 10 acquires from the printing device 30 side the information indicative of the stoppage of printing in response to detection of satisfaction of any of the set conditions, as shown in FIG. 5B (step 211). For example, when the prescribed quantity is 200, the detection result acquisition section 106 acquires from the printing device 30 side the information indicative of the stoppage of printing due to the print quantity reaching 200. The detection result processing section 107 recognizes that the printing has been stopped due to detection of satisfaction of any of the set conditions (step 212). For example, the detection result processing section 107 recognizes that the printing has been stopped due to the print quantity reaching the prescribed quantity of 200. The information indicative of the print stoppage and the information indicative of the detected condition are reflected in storage contents of the condition storage section 103 (step 213), and thus the process after the print stoppage ends. For example, information indicative of the print stoppage due to the print quantity reaching the prescribed quantity is reflected in the storage contents of the condition storage section 103, and thus the process after the print stoppage ends. This reflection in the stored content involves, for example, recording the fact of the print stoppage along with the information indicative of the detected condition.

Thus, in the present embodiment, prior to the printing process by the printing device 30, the printing device 30 side (the printing device 30 or the printing device 30 and the user PC 40) acquires the information indicative of the conditions set by the host device 10. Detection of satisfaction of any of these conditions is made by the printing device 30 side. This eliminates the need for the host device 10 to sequentially monitor the processes executed by the printing device 30 side.

As described in detail above, according to the present embodiment, when satisfaction of any of the conditions predetermined based on the assumption that printing is performed on regular can bodies by the user is detected during a printing process by the printing device 30, the printing process is stopped. This allows, for example, a printing process to be performed on can bodies that can be considered as regular ones by manufacturers providing can bodies, manufacturers providing beverages, or the like.

In the present embodiment, information indicative of the status of the printing device 30 measured by the status measurement section 303 includes the quantity of can bodies having undergone the printing by the printing device 30, the operating time of the printing device 30, the amount of electricity and consumable used by the printing device 30, and the position of the printing device 30. However, information indicative of the status of the printing device 30 to be measured by the status measurement section 303 is not limited to these pieces of information, and any information that allows for measurement of the operation amount or position of the printing device 30 can be employed.

In the present embodiment, the ink is employed as an example of a consumable used by the printing device to print on can bodies. However, the consumable is not limited to the ink; any consumable whose usage increases in accordance with the increasing amount of printing by the printing device may be employed.

### Reference Signs List

- 1: Can body printing system
- 10: Host device
- 30: Printing device
- 31: Control section
- 32: Communication section
- 33: Printing section
- 34: Measurement section
- 40: User PC
- 301: Condition acquisition section
- 302: Condition storage section
- 303: Status measurement section
- 304: Comparison enabling section
- 305: Status detection section
- 306: Print stopping section
- 307: Detection result output section
- 341: Quantity measurement section
- 342: Time measurement section
- 343: Electricity measurement section
- 344: Ink amount measurement section
- 345: Position measurement section
- 351: Prescribed quantity detection section
- 352: Prescribed time detection section
- 353: Prescribed electricity detection section
- 354: Prescribed amount detection section
- 355: Prescribed position detection section

## Claims

1. A can body printing system (1) comprising:
a detection section (305) configured to, when printing is performed on a can body by a user, detect whether a predetermined condition for the printing is satisfied, wherein the predetermined condition is set by a third party that is not the user based on an assumption that printing is performed on regular can bodies by the user; and **characterised in that** the system further comprises
a control section (31) configured to control a stoppage of the printing on the can body in response to detection of the satisfaction of the predetermined condition.

2. The can body printing system (1) according to claim 1, wherein
the predetermined condition is a condition related to a prescribed quantity for printing on can bodies,
the can body printing system (1) further comprises a quantity measurement section (34) configured to measure a quantity of can bodies having undergone the printing, and
the detection section (305) is configured to detect that the quantity measured by the quantity measurement section (34) has reached the prescribed quantity.

3. The can body printing system (1) according to claim 1, wherein
the predetermined condition is a condition related to prescribed time for printing on can bodies,
the can body printing system (1) further comprises a time measurement section (342) configured to measure time taken for the printing, and
the detection section (305) is configured to detect that the time measured by the time measurement section (342) has reached the prescribed time.

4. The can body printing system (1) according to claim 1, wherein
the predetermined condition is a condition related to a prescribed amount of electricity used by a device for printing on can bodies,
the can body printing system (1) further comprises an electricity measurement section (343) configured to measure an amount of electricity used for the printing, and
the detection section (305) is configured to detect that the amount of electricity measured by the electricity measurement section (343) has reached the prescribed amount of electricity.

5. The can body printing system (1) according to claim 1, wherein
the predetermined condition is a condition related to a prescribed amount of a consumable for use in printing on can bodies,
the can body printing system (1) further comprises a consumable amount measurement section (344) configured to measure an amount of the consumable used for the printing, and
the detection section (305) is configured to detect that the amount of the consumable measured by the consumable amount measurement section (344) has reached the prescribed amount.

## Patentansprüche

1. Dosenkörperbedrucksystem (1), umfassend:
einen Erfassungsabschnitt (305), der so konfiguriert ist, dass er beim Bedrucken eines Dosenkörpers durch einen Benutzer erfasst, ob eine vorbestimmte Bedingung für das Bedrucken erfüllt ist, wobei die vorbestimmte Bedingung von einem Dritten, der nicht der Benutzer ist, auf der Grundlage einer Annahme festgelegt wird, dass das Bedrucken von regelmäßigen Dosenkörpern durch den Benutzer erfolgt; und
**dadurch gekennzeichnet ist, dass** es außerdem einen Steuerabschnitt (31) umfasst, der so konfiguriert ist, dass er eine Unterbrechung des Druckens auf den Dosenkörper als Reaktion auf die Feststellung der Erfüllung der vorbestimmten Bedingung steuert.

2. Dosenkörperbedrucksystem (1) nach Anspruch 1, wobei
die vorbestimmte Bedingung eine Bedingung ist, die sich auf eine vorgeschriebene Menge zum Bedrucken von Dosenkörpern bezieht,
das Dosenkörperbedrucksystem (1) ferner einen Mengenmessabschnitt (34) umfasst, der so konfiguriert ist, dass er eine Menge von Dosenkörpern misst, die dem Druck unterzogen wurden, und
der Erfassungsabschnitt (305) konfiguriert ist, um zu erfassen, dass die von dem Mengenmessabschnitt (34) gemessene Menge die vorgeschriebene Menge erreicht hat.

3. Dosenkörperbedrucksystem (1) nach Anspruch 1, wobei
die vorbestimmte Bedingung eine Bedingung ist, die sich auf die vorgeschriebene Zeit zum Bedrucken von Dosenkörpern bezieht,
das Dosenkörperbedrucksystem (1) ferner einen Zeitmessabschnitt (342) umfasst, der so konfiguriert ist, dass er die für das Bedrucken benötigte Zeit misst, und
der Erfassungsabschnitt (305) konfiguriert ist, um zu erfassen, dass die von dem Zeitmessabschnitt (342) gemessene Zeit die vorgeschriebene Zeit erreicht hat.

4. Dosenkörperbedrucksystem (1) nach Anspruch 1, wobei
die vorbestimmte Bedingung eine Bedingung ist, die sich auf eine vorgeschriebene Menge an Elektrizität bezieht, die von einer Vorrichtung zum Bedrucken von Dosenkörpern verwendet wird,
das Dosenkörperbedrucksystem (1) ferner einen Elektrizitätsmessabschnitt (343) umfasst, der so konfiguriert ist, dass er eine für das Drucken verwendete Elektrizitätsmenge misst, und
der Erfassungsabschnitt (305) so konfiguriert ist, dass er erfasst, dass die von dem Strommessabschnitt (343) gemessene Strommenge die vorgeschriebene Strommenge erreicht hat.

5. Dosenkörperbedrucksystem (1) nach Anspruch 1, wobei
die vorbestimmte Bedingung eine Bedingung ist, die sich auf eine vorgeschriebene Menge eines Verbrauchsmaterials zur Verwendung beim Bedrucken von Dosenkörpern bezieht,
das Dosenkörperbedrucksystem (1) ferner einen Verbrauchsmaterialmengenmessabschnitt (344) umfasst, der so konfiguriert ist, dass er eine Menge des für den Druck verwendeten Verbrauchsmaterials misst, und
der Erfassungsabschnitt (305) konfiguriert ist, um zu erfassen, dass die Menge des Verbrauchsmaterials, die durch den Verbrauchsmaterialmengenmessabschnitt (344) gemessen wurde, die vorgeschriebene Menge erreicht hat.

## Revendications

1. Système (1) d'impression de corps de canette comprenant :
une section (305) de détection configurée pour, lorsqu'une impression est effectuée sur un corps de canette par un utilisateur, détecter si une condition prédéterminée pour l'impression est satisfaite, dans lequel la condition prédéterminée est définie par une tierce partie qui n'est pas l'utilisateur sur la base d'une hypothèse selon laquelle l'impression est effectuée sur des corps de canette classiques par l'utilisateur ; et **caractérisé en ce que** le système comprend en outre
une section (31) de commande configurée pour commander un arrêt de l'impression sur le corps de canette en réponse à la détection de la satisfaction de la condition prédéterminée.

2. Système (1) d'impression de corps de canette selon la revendication 1, dans lequel
la condition prédéterminée est une condition liée à une quantité prescrite pour une impression sur des corps de canette,
le système (1) d'impression de corps de canette comprend en outre une section (34) de mesure de quantité configurée pour mesurer une quantité de corps de canette ayant été soumis à l'impression, et
la section (305) de détection est configurée pour détecter que la quantité mesurée par la section (34) de mesure de quantité a atteint la quantité prescrite.

3. Système (1) d'impression de corps de canette selon la revendication 1, dans lequel
la condition prédéterminée est une condition liée à un temps prescrit pour une impression sur des corps de canette,
le système (1) d'impression de corps de canette comprend en outre une section (342) de mesure de temps configurée pour mesurer un temps pris pour l'impression, et
la section (305) de détection est configurée pour détecter que le temps mesuré par la section (342) de mesure de temps a atteint le temps prescrit.

4. Système (1) d'impression de corps de canette selon la revendication 1, dans lequel
la condition prédéterminée est une condition liée à une quantité d'électricité prescrite utilisée par un dispositif pour une impression sur des corps de canette,
le système (1) d'impression de corps de canette comprend en outre une section (343) de mesure d'électricité configurée pour mesurer une quantité d'électricité utilisée pour l'impression, et
la section (305) de détection est configurée pour détecter que la quantité d'électricité mesurée par la section (343) de mesure d'électricité a atteint la quantité d'électricité prescrite.

5. Système (1) d'impression de corps de canette selon la revendication 1, dans lequel
la condition prédéterminée est une condition liée à une quantité prescrite d'un consommable pour une utilisation dans l'impression sur des corps de canette,
le système (1) d'impression de corps de canette comprend en outre une section (344) de mesure de quantité de consommable configurée pour mesurer une quantité du consommable utilisée pour l'impression, et
la section (305) de détection est configurée pour détecter que la quantité du consommable mesurée par la section (344) de mesure de quantité de consommable a atteint la quantité prescrite.
